Europäisches Patentamt

(19) European Patent Office

Office européen des brevets

(11) Publication number: **0 138 224**
**A2**

## (12) EUROPEAN PATENT APPLICATION

(21) Application number: **84112455.5**

(22) Date of filing: **16.10.84**

(51) Int. Cl.⁴: **C 08 F 291/00, C 08 F 2/34**

(30) Priority: **17.10.83 JP 194560/83**

(43) Date of publication of application: **24.04.85**
**Bulletin 85/17**

(84) Designated Contracting States: **BE DE FR GB IT NL**

(71) Applicant: **KANEGAFUCHI KAGAKU KOGYO KABUSHIKI KAISHA, 2-4 Nakanoshima 3-chome, Kita-ku Osaka-shi Osaka-fu (JP)**

(72) Inventor: **Somemiya, Akiyoshi, 440-19, Okuradani Higashiyama, Akashi-shi Hyogo-ken (JP)**

(74) Representative: **Türk, Dietmar, Dr. rer. nat. et al, Redies, Redies, Türk & Gille Patentanwälte Brucknerstrasse 20, D-4000 Düsseldorf 13 (DE)**

(54) **Gas phase graft polymerization method.**

(57) In a gas phase graft polymerization method wherein at least one radical polymerizable monomer is graft-polymerized onto a polymer by feeding the monomer in the gaseous state onto the polymer while maintaining the polymer substantially in the solid state, an improvement wherein a radical polymerization initiator is fed in the gaseous state onto the polymer. According to the process, the polymer is impregnated with the initiator in the dry state without using a solvent, which results in achievement of a high graft modification efficiency at low cost without troublesome procedures.

0138224

TITLE: <u>GAS PHASE GRAFT POLYMERIZATION METHOD</u>

The present invention relates to a gas phase graft polymerization method. More particulary, it relates to such method characterized by the manner of addition of a radical polymerization initiator in graft polymerization.

The present inventor and others have already disclosed in Japanese Tokkyo Kokai Nos. 34716/1981 and 174309/1982 that the graft modification of a polymer in a high modification efficiency becomes possible when a radical polymerizable monomer is graft-polymerized onto the polymer by feeding the monomer in the gaseous state onto the polymer. Such graft modification method is advantageous particularly in (1) that the grafting degree of monomer is high, (2) that the modification efficiency of trunk polymer is high and (3) that it is economical. However, it has been found that, for preparing a homogeneous graft-modified polymer, it is important how uniform impregnation of the polymer with a radical polymerization initiator is achieved.

In the methods disclosed in the above-cited publications, too, uniform impregnation of a polymer to be graft-modified with a radical polymerization initiator is pursued by using a solvent which is a nonsolvent for the polymer but can dissolve the initiator, as described in the working examples of the publications. This is because ununiform initiator impregnation results in a decreased initiator efficiency due to termination by recombination of the radical derived from the initiator as well as in formation of ununiformly graft-modified products or other disadvantages in the subsequent graft polymerization step. The above-cited publications also disclose a method of impregnating a polymer with a radical polymerization initiator in the emulsified state for achieving the same end. In each case, however, a dried polymer is turned into a wet state using a large amount of solvent and therefore, in the prafctice of the methods on a commercial scale, a process consisting of impregnation, separation and drying steps, which is troublesome, is required and the energy cost required for evaporation and recovery of the solvent increases. Such important problems have so far remained unsolved.

It is an object of the present invention to solve the above problems and to enable achievement of a high modification efficiency at low cost by following an easy and simple procedure without taking any step of polymer wetting.

This and other objects of the invention will become apparent from the description hereinafter.

The present invention provides a gas phase graft polymerization method wherein at least one radical polymerizable monomer is graft-polymerized onto a polymer by feeding the monomer in the gaseous state onto the polymer while maintaining the polymer substantially in the solid state, which method is characterized in that a radical polymerization initiator is fed in the gaseous state onto the polymer.

As the polymer used in the present invention, there may be employed any of those polymers which are capable of forming polymerization-active radicals upon attack of the radical derived from a radical polymerization initiator.

Such polymers more specifically include, for instansce, polyethylene, chlorinated polyethylene, ethylene-propylene copolymer, ethylene-vinyl acetate copolymer, polypropylene, polybutene, polystyrene, styrene-$\alpha$-methylstyrene copolymer, styrene-$\alpha$-methylstyrene-acrylonitrile terpolymer, styrene-acrylonitrile copolymer, styrene-methyl methacrylate copolmer, polymethyl methacrylate, methyl methacrylate-$\alpha$-methylstyrene copolymer, polymethyl acrylate, polyethyl acrylate, polybutyl acrylate, polyacrylonitrile, polyvinyl chloride (PVC), chlorinated polyvinyl chloride (CPVC), vinyl chloride-propylene copolymer, vinyl chloride-ethylene copolymer, vinyl chloride-vinyl acetate copolymer, polyvinylidene chloride, polyvinyl acetate, polyvinyl alcohol, polyvinyl methyl ether, polyvinyl isobutyl ether, polyvinyl methyl ketone, polyacetal, polypropylene oxide, polycarbonate, polyphenylene pxide (PPO), polyethylene terephthalate, polybutylene terephthalate, nylon-6, nylon-11, nylon-12, polyimide, polyaryl ether ketone, polysulfone, polyether sulfone, polyaryl sulfone, bisphenol type epoxy resin, novolak type epoxy resin, polyurethane, triallyl cyanurate resin, triallyl cyanurate-styrene copolymer, phenol resin, urea resin, melamine resin, polybutadiene, natural rubber, styrene-butadiene copolymer, polyisoprene, polydimethylsiloxane, polymethylphenylsiloxane, cellulose acetate, ethyl cellulose, ethylene-propylene-diene terpolymer (EPDM), and the like.

These polymers are in the crystalline, glassy or rubber-like state at the graft polymerization temperature and are subjected to graft polymerization in the form of powder, bulk, film, pellet, bead or fiber, for instance. In a special embodiment of the invention, the polymers may be used in the form of moldings. In particular, when low glass transition temperature polymers such as ethylene-vinyl acetate copolymer, polybutene and EPDM are used, it is necessary to select the graft polymerization temperature carefully. If the graft polymerization temperature is higher than the glass transition temperature, polymer powders, moldings or the like adhere together and the process becomes inoperable in some instances. In such case, the use of an inorganic filler such as talc, clay, carbon black or titanium white may bring about a solution. This measure is also effective in cases where high glass transition temperature polymers are used. It is also possible to subject a mixture of two or more of the above polymers to

- 4 -    0138224

graft polymerization, and this is suited for the purpose of obtaining polymer alloys, and the like.

The radical polymerization initiator used in the present invention is organic radical polymerization initiators commonly used in radical polymerizations. More specifically, it includes, for instance, t-butyl hydroperoxide, t-butyl peroxyisopropyl carbonate, methyl ethyl ketone peroxide, di-t-butyl peroxide, dicumyl peroxide, acetyl peroxide, t-butyl cumyl peroxide, bis(t-butyl peroxy) butane, t-butyl peroxyacetate, t-butyl peroxybenzoate, 2-t-butylazo-2-cyano-4-methoxy-4-methylpentane, 2-t-butylazo-2-cyano-4-methylpentane, and the like. In the present invention, it is important to pay attention to the vapor pressures of these radical initiators since the initiators are gasified and fed onto the polmers. Therefore, initiators having relatively high vapor pressures such as dialkyl peroxides and alkyl peresters are particularly preferred. These initiators may be used alone or in combination of two or more.

These radical initiators are vaporized under normal or reduced pressure and used for impregnation of polymers therewith by adsorption. In a specific embodiment, an initiator such as di-t-butyl peroxide is dropped into a vaporizer heated, for instance, at 80°C in a nitrogen stream and the resulting gas is introduced into a water- or brine-cooled vessel containing a polymer with stirring, whereby the intended end can be achieved(hereinafter referred to as "Method A"). These initiators, even in the vapor state, can in general be easily adsorbed on polymers, so that cooling is not required in many instances. It is thus possible to rather positively heat the polymer-containing vessel to a temperature higher than the decomposition temperature of a radical initiator to thereby cause the absorption or adsorption of the radical initiator gas and the decomposition thereof, namely radical formation on the polymer, substantially simultaneously (hereinafter referred to as "Method B"). In a more advanced embodiment, it is further possible to feed a monomer gas to be mentioned later herein simultaneously with the feeding of a radical initiator gas to thereby effect the graft polymerization (hereinafter referred to as "Method C"). According to the study results obtained by the present inventor, Method A or Method B is preferable when it is desired that the amount of the formed free polymer which is not grafted on the trunk polymer is as little as possible, whereas Method C is preferable when a high radical initiator efficiency is desired. Which of these methods should be selected depends on the kind of the polymer used, the kind of the radical initiator, the kind of the radical polymerizable monomer and the characteristic properties required of the products.

As used herein, the term "radical polymerizable monomer" means a compound having at least one unsturated bond within the molecule and capable of radical polymerization. Such monomer includes, for instance, vinyl chloride; vinylidene chloride; vinyl acetate; styrene monomers such as styrene, α-methylstyrene, 2,4-dimethylstyrene and p-chlorostyrene; acrylonitrile monomers such as acrylonitrile and methacrylonitrile; acrylic monomers such as acrylic acid, methyl acrylate, ethyl acrylate, butyl acrylate, methacrylic acid, methyl methacrylate (MMA) and ethyl methacrylate; 1,3-butadiene; isoprene; chloroprene; 1-butene; ethylene; propylene; and the like, and derivatives of the foregoing monomers. One or more of these monomers are graft-polymerized on a backbone or trunk polymer. When two or more monomers are used combinedly, they are used in the form of a mixture or the monomers are added successively in series. Either mode may be selected depending on the purpose of the process.

As long as the monomer selected shows a vapor pressure, the gas phase graft polymerization is possible. However, when the vapor pressure of the monomer at the polymerization temperature is low, the rate of polymerization is lowered. Therefore, from the

- 6 - 0138224

viewpoint of commercial production, it is preferred that at least one monomer used has a vapor pressure of not lower than 50 mm Hg at $150^{\circ}$C.

The monomer is used in an amount of not less than 0.5% in terms of grafting degree. Herein, grafting degree is defined as follows:

$$\text{Grafting degree} = \frac{\text{Weight of the monomer grafted}}{\text{Weight of the charged polymer}} \times 100$$

The polymerization can be carried out batchwise or by the flow method or in other adequate manners by using a reaction vessel with a mixing mechanism for powder or the like, such as a paddle drier, fluidized bed drier, conical drier, jacketed ribbon blender or heating vessel with a powder stirrer.

In accordance with the present invention, the graft polymerization is preferably carried out at a temperature of $50^{\circ}$ to $200^{\circ}$C, particularly preferably $70^{\circ}$ to $200^{\circ}$C. The graft polymerization temperature to be used cannot be specified any more since it varies depending on the kind of the trunk polymer used, the kind of the radical initiator used, etc. The graft polymerization temperature is selected within the above temperature range in consideration of the structure of the trunk polymer used, the vapor pressure of the monomer used for graft polymerization, the decomposition temperature of the radical initiator used and other factors.

The reaction in the practice of the present invention is a gas phase graft polymerization between the trunk polymer substantially in the solid state and the monomer in the gaseous state. In some instances, the graft polymerization is promoted by addition of a solvent inert to radical polymerization in an amount of not more than 10 parts by weight, particularly 0.05 to 5 parts by weight, per 100 parts by weight of the trunk polymer. The reasons are still unknown. Such solvent may be selected appropriately depending on the radical initiator, monomer, trunk polymer and desired graft polymer. The solvent can be used, for example, in a manner such that the trunk polymer is impregnated with the solvent in the gaseous state or a solution of the radical initiator in the solvent is gasified for addition to the reaction system. The solvent-added trunk polymer obtained in such manner is in the same bulk, powder or other solid form as that before addition.

In the present invention, the polymerization degree of the grafting branch can be controlled not only by adjusting the amount of radical initiator used, the monomer concentration, the feedig rate of monomer, the polymerization temperature, etc., but also by using a chain transfer agent in general use. The chain transfer agent used includes, for instance, mercaptans, alcohols, halogenated hydrocarbons, and the like. The chain transfer agent may be added to the graft polymerization system also in the gaseous state together with the monomer. The agent may also be added, prior to graft polymerization, to the trunk polymer by adsorption, impregnation or admixing.

The graft-modified polymers obtained in accordance with the present invention are high in uniformity in composition and very low in content of impurities such as gels generally formed in ordinary graft polymerization processes and therefore can be used widely in various fieldes. For instance, grafting onto a trunk polymer such as polyvinyl chloride or chlorinated polyvinyl chloride, of 5 to 20% by weight of a branch polymer incompatible therewith, such as polystyrene, can result in improved processability, and grafting 10 to 60% by weight of a methyl methacrylate-styrene copolymer onto chlorinated polyvinyl chloride gives a graft product having good compatibility with polyvinyl chloride, thereby realizing an alloy of both polymers. The surface of a film, fiber or other molded article can also be modified by grafting in accordance with the present invention. For example, grafting of methyl methacrylate onto a vinyl chloride-acrylonitrile copolymer fiber gives fiber having good dyeability and luster.

The graft polymerization method provided by the present invention is thus a method where, in preparing graft polymerization products by causing at least one monomer in the gaseous phase to graft onto a trunk polymer substantially in the solid state, the trunk polymer is impregnated with a radical polymerization initiator in the gaseous state prior to graft polymerization or a radical polymerization initiator in the gaseous state is introduced into the polymerization system simultaneously with the feeding of monomer. According to the method, the high grafting degree of the monomer and the high modification efficiency of the trunk polymer are achieved. The method can be practiced easily on a commercial scale, hence is a very valuable method of graft polymerization.

The present invention is more particularly described and explained by means of the following Examples. These Examples are intended to illustrate the invention and not be construed to limit the scope of the invention. It is to be understood that various changes and modification may be made in the invention without departig from the spirit and scope thereof.

## Example 1

A jacketed 5-liter reaction vessel was charged with 300 g of PVC powder, followed by evacuation and degasification in vacuo. 9 g of tert-butyl peroxybenzoate vaporized in vacuo at $70^{\circ}$C was introduced into the vessel while agitating the PVC powder to cause it to be adsorbed on the PVC powder. The pressure within the vessel was restored to atmospheric pressure with nitrogen gas and the temperature was raised to $100^{\circ}$C. A mixed gas composed of 50% by volume of styrene monomer and 50% by volume of nitrogen gas as maintained at $110^{\circ}$C was passed through the vessel at a rate of 1 liter per minute for 6 hours. After cooling, the powder was washed with methanol to thereby remove low molecular weight impurities and then dried *in vacuo*. The graft-modified polymer thus obtained had a light yellow color and elemental analysis and infrared absorption spectrometry indicated that the grafting degree thereof was 35%.

### Example 2

The same reaction vessel as used in Example 1 was charged with 300 g of CPVC powder, followed by adsorption of 12 g of di-tert-butyl peroxide in the same manner. After restoration of the pressure to ordinary pressure with nitrogen gas, the temperature was raised to 110°C and a mixed gas composed of MMA, styrene and nitrogen gas and having a monomer cncentration of 50% by volume and a MMA/styrene mole ratio of 1/1 and maintained at 120°C was passed through the vessel at a flow rate of 1 liter per menute for 10 hours, followed by the same after-treatment as in Example 1. For the modified product thus obtained, the grafting degree was found to be 46%.

### Example 3

The same procedures as in Example 2 except that PPO powder was used in place of the CPVC powder and a mixed gas composed of acrylonitrile, styrene and nitrogen gas and having a monomer concentration of 50% by volume and an acrylonitrile/styrene mole ratio of 4:1 and maintained at 145°C was passed through the vessel at a flow rate of 1 liter per menute for 6 hours were repeated to give a modified product. The product thus obtained had a grafting degree of 27%.

WHAT IS CLAIMED IS:

1. In a gas phase graft polymerization method wherein at least one radical polymerizable monomer is graft-polymerized onto a polymer by feeding the monomer in the gaseous state onto the polymer while maintaining the polymer substantially in the solid state, an improvement wherein a radical polymerization initiator is fed in the gaseous state onto the polymer.

2. The method of Claim 1, wherein the radical polymerization initiator is fed before the feeding of the monomer.

3. The method of Claim 2, wherein the polymerization system is maintained at a temperature of higher than the decomposition temperature of the radical polymerization initiator when the initiator is fed.

4. The method of Claim 1, wherein the radical polymerization initiator is fed simultaneously with the feeding of the monomer.